# EUROPEAN PATENT SPECIFICATION

(11) **EP 3 658 793 B1**
(45) Date of publication and mention of the grant of the patent: **03.11.2021**
(21) Application number: 18750515.1
(22) Date of filing: 18.07.2018
(51) Int. Cl.: F16C 31/02, F16C 32/06, B67B 3/00

(54) **FLUID CUSHION GUIDING DEVICE**
FLUIDKISSEN FÜHRUNGSVORRICHTUNG
APPAREIL DE GUIDAGE A COUSSIN DE FLUIDE

(30) Priority: 24.07.2017 IT 201700084319
(43) Date of publication of application: 03.06.2020
(73) Proprietor: Arol S.p.A., 14053 Canelli AT (IT)
(72) Inventor: AMERIO, Diego, 14053 Canelli (AT) (IT); CIPRIANI, Marco, 14053 Canelli (AT) (IT)
(74) Representative: Robba, Pierpaolo
(86) International application number: PCT/IB2018/055329
(87) International publication number: WO 2019/021118

(56) References cited:
- EP-A1- 1 262 445
- AU-B2- 462 046
- DE-T2- 60 036 716
- GB-A- 1 013 351
- GB-A- 2 153 928
- NL-B1- 2 013 735

## Description

### Technical Field

The present invention relates to the devices for guiding a rotary motion and/or a translatory motion of a member.

More particularly, the invention concerns a fluid cushion guiding device, in particular an air cushion guiding device.

### Background of the invention

In many technical fields, the need exists of guiding cylindrical members performing a rotary motion, while simultaneously allowing their translation.

Known guiding devices, capable of performing such a function, are for example bushings made of a material with low frictional coefficient, in order to facilitate the sliding of the member to be guided and to limit the resulting overheating, or recirculating ball bushings or bushings with a plurality of stationary balls, arranged to allow the relative roto-translation between the same bushings and the members to be guided.

Such devices require a physical contact with the members to be guided, and this originates a number of problems. These problems concern in particular the alignment of the axes of the guiding devices and the members to be guided, the working tolerances, the need for lubrication between the contacting surfaces of the guiding devices and the members to be guided, and the wear of such surfaces as well as of the balls, if any, of the guiding devices, which balls could creep on the surfaces of the members to be guided.

Indeed, as well known, the alignment of the axes and the working tolerances are particularly critical issues, both at the assembling and during working, where complex operations require minimum tolerances in order to avoid possible clearances. On the other hand, the wear of the guiding devices and/or the members to be guided can alter their performance. Moreover, the presence of lubricants and powders generated by the abrasion of the contacting parts makes such guiding devices unsuitable for applications in which a clean environment is an indispensable requirement. EP1208289 B1 discloses a device with features according to the preamble of claim 1.

### Description of the invention

It is an object of the invention to provide a fluid cushion guiding device, in particular an air cushion guiding device, which obviates the drawbacks of the prior art.

According to the invention, this is obtained in that the guiding device comprises an inner cylindrical portion and an outer cylindrical portion, which are coaxial with each other and are configured so as to allow creating a gap (or cushion) of pressurised fluid between the inner cylindrical portion and a member to be guided in a relative rotary and/or translatory movement relative to the guiding device

The inner cylindrical portion has plurality of radial holes, preferably through holes, having first ends communicating, preferably directly, with a first gap formed between the inner cylindrical portion and a member to be guided. The outer cylindrical portion has at least one radial opening arranged to allow introducing a pressurised fluid from the outside, which fluid reaches the first gap through the radial holes and creates the fluidic gap between the inner cylindrical portion and the member to be guided.

The radial holes of the inner cylindrical portion preferably have end portions directed towards the respective first ends and having a cross-section larger than the remaining cross-section of the holes. For instance, the end portions have a frusto-conical shape with cross-sectional size progressively increasing towards the first ends of the respective holes. In a balance condition, defined as the condition in which the fluidic gap has uniform thickness, fluid volumes with uniform pressure are advantageously created at said end portions.

According to the invention, the pressure of the fluid present in a given end portion changes in inverse proportion to the thickness of the fluidic gap at said end portion. In this manner, when, because of the relative movements between the guiding device and the member to be guided, the fluidic gap formed between the inner cylindrical portion and the member to be guided takes a non-uniform thickness and decreases on one side of the guiding device and increases on the radially opposite side, the pressure of the fluid volumes in the end portions increases where the thickness of the fluidic gap is smaller and decreases where the thickness is greater. This creates a pressure difference pushing the member to be guided towards the side where the fluidic gap has a greater thickness, thereby tending to restore the balance condition in which the thickness of the fluidic gap is uniform.

In accordance with a preferred embodiment of the invention, the guiding device includes a second gap formed between the inner cylindrical portion and the outer cylindrical portion and communicating, preferably directly, with the at least one radial opening of the outer cylindrical portion. The radial holes of the inner cylindrical portion have second ends communicating, preferably directly, with such a second gap, so that the fluid introduced into the at least one radial opening reaches the first gap through the second gap and the radial holes in order to form the fluidic gap.

In accordance with a further embodiment of the invention, no gap is formed between the inner cylindrical portion and the outer cylindrical portion. The inner cylindrical portion includes instead a network of channels establishing communication between the radial holes of the same portion, and the at least one radial opening of the outer cylindrical portion communicates, preferably directly, with a respective radial hole aligned with the same opening. In this embodiment, the fluid introduced into the at least one radial opening reaches the first gap through the network of communication channels and the radial holes in order to form the fluidic gap.

It is possible to envisage an embodiment in which the guiding device includes both the second gap and the network of communication channels.

According to another embodiment of the present invention, the outer cylindrical portion includes at least two radial openings, and the second gap between the inner cylindrical portion and the outer cylindrical portion is divided into at least two sectors or segments that are not in direct communication with each other. Each sector of the gap communicates, preferably directly, with a corresponding radial opening of the outer cylindrical portion and with second ends of a corresponding subset of radial holes of the inner cylindrical portion. Thanks to such a configuration, by introducing pressurised fluid through one or more radial openings, it is possible to increase the pressure only in the subsets of holes communicating with such radial openings through the respective gap sectors. For instance, this allows increasing the pressure in the only subsets of holes where the fluidic gap has taken a smaller thickness, in order to more quickly restore the balance condition in which the thickness of the fluidic gap is uniform.

According to another embodiment of the invention, no gap is formed between the inner cylindrical portion and the outer cylindrical portion. The inner cylindrical portion includes instead at least two networks of channels establishing communication between radial holes, the networks not being in direct communication with each other. The outer cylindrical portion comprises at least two radial openings and each network of channels communicates with a corresponding radial opening and is arranged to make the radial holes of a corresponding subset of radial holes of the inner cylindrical portion communicate with one another. Thanks to such a configuration, by introducing pressurised fluid through one or more radial openings, it is possible to increase the pressure in the only subsets of holes associated with such radial openings. For instance, this advantageously allows increasing the pressure in the only radial holes where the fluidic gap has taken a smaller thickness, in order to more quickly restore the balance condition in which the thickness of the fluidic gap is uniform.

In accordance with the present invention, the inner cylindrical portion and the outer cylindrical portion of the guiding device are two separate sleeves, i.e. an inner sleeve and an outer sleeve. In the alternative, the two cylindrical portions can be made as an integral piece by means of the 3D printing technology (Additive Manufacturing).

According to another feature of the invention, the guiding device includes sensors capable of detecting the relative displacements between the guiding device and the member to be guided, more particularly a possible misalignment between the axis of the guiding device and the axis of the member to be guided, and a control system configured to control introduction of the pressurised fluid through one or more radial openings of the outer cylindrical portion based on the displacements detected by the sensors. More particularly, based on the misalignment detected by the sensors, entailing that the fluidic gap has taken a non-uniform thickness, the control system controls fluid introduction through one or more radial openings located on the side of the guiding device where the thickness of the fluidic gap is smaller, or anyway openings communicating with subsets of radial holes where the thickness of the fluidic gap is smaller. This allows compensating more quickly the misalignment of the member to be guided relative to the aforesaid balance condition.

The invention also provides a capping head for applying for instance screw or pressure caps to containers, wherein a cap application part has a shaft that can be driven according to a rotary movement about a longitudinal axis and a translatory movement along said axis. The capping head includes a guiding device according to the invention arranged to guide the shaft in its rotary and/or translatory movement.

### Brief Description of the Figures

The above and other features and advantages of the invention will become apparent from the following description of preferred embodiments made by way of non-limiting example with reference to the accompanying Figures, in which:
- Fig. 1 is a part sectional view of a first embodiment of the guiding device according to the invention and of the member guided by it;
- Fig. 2 is a part sectional view, similar to Fig. 1, in which the guiding device lacks the outer sleeve;
- Fig. 3 is a view of the guiding device without the outer sleeve;
- Fig. 4 is an enlarged view of a detail of the guiding device shown in Fig. 3;
- Fig. 5 shows a turret of a capping machine with a plurality of capping heads using the guiding device according to the invention;
- Fig. 6 is a longitudinal sectional view of a capping head of the turret shown in Fig. 5; and
- Fig. 7 is an enlarged view of the region of the capping head where the guiding device according to the invention is located.

### Description of preferred embodiments

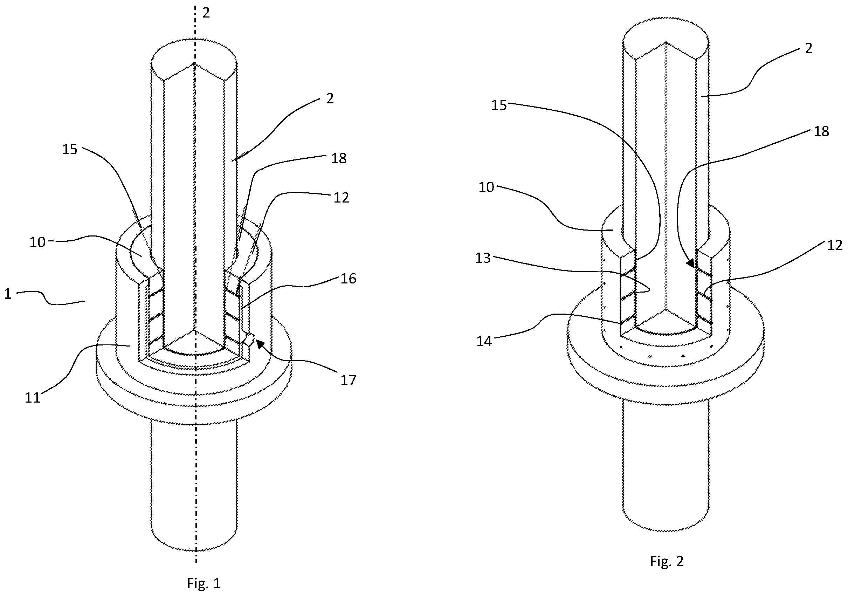

Referring to Figs. 1 and 2, the air cushion guiding device according to a first embodiment of the invention is generally denoted 1. Device 1 is a bushing comprising two coaxial cylindrical sleeves, i.e. an inner sleeve 10 and an outer sleeve 11, preferably but not necessarily having the same length.

The Figures also show a member, for instance a shaft 2, arranged to be guided by device 1. More particularly, guiding device 1 is arranged to drive a shaft 2 into a rotary, translatory or roto-translatory movement relative to guiding device 1. Thus, it is possible, for instance, to apply a roto-translatory movement to either shaft 2 or guiding device 1, or to apply one of the rotary or translatory movements to shaft 2 and to apply the other movement to guiding device 1. Reference symbol A denotes the longitudinal axis of both sleeves.

Inner sleeve 10 of guiding device 1 has a plurality of radial through holes 12. Such holes 12 have first ends 13 in communication with a first gap 15 formed between inner sleeve 10 and shaft 2, and second ends 14 communicating, preferably directly, with a second gap 16 formed between inner sleeve 10 and outer sleeve 11. Preferably, inner sleeve 10 further includes a plurality of channels (not shown in the Figures) establishing communication among the holes.

Outer sleeve 11 of guiding device 1 has at least one radial opening 17 communicating, preferably directly, with the second gap 16 and arranged to allow introduction of a pressurised fluid, e.g. air, from the outside. Such a fluid reaches the first gap 15 through the second gap 16 and the plurality of radial holes 12.

The presence of pressurised fluid in the first gap 15 advantageously allows creating a fluidic gap (or cushion) in the first gap 15, between inner sleeve 10 and shaft 2. Thanks to such a fluidic gap, inner sleeve 10 and shaft 2 are prevented from coming into contact, both in static conditions and in conditions of relative rotary and/or translatory motion between the sleeve and the shaft. In this way, wear due to friction between guiding device 1 and shaft 2 is advantageously avoided. More particularly, a balance condition is defined in which longitudinal axis A of the inner and outer sleeves coincides with the shaft axis. In such a balance condition, the fluidic gap has uniform thickness.

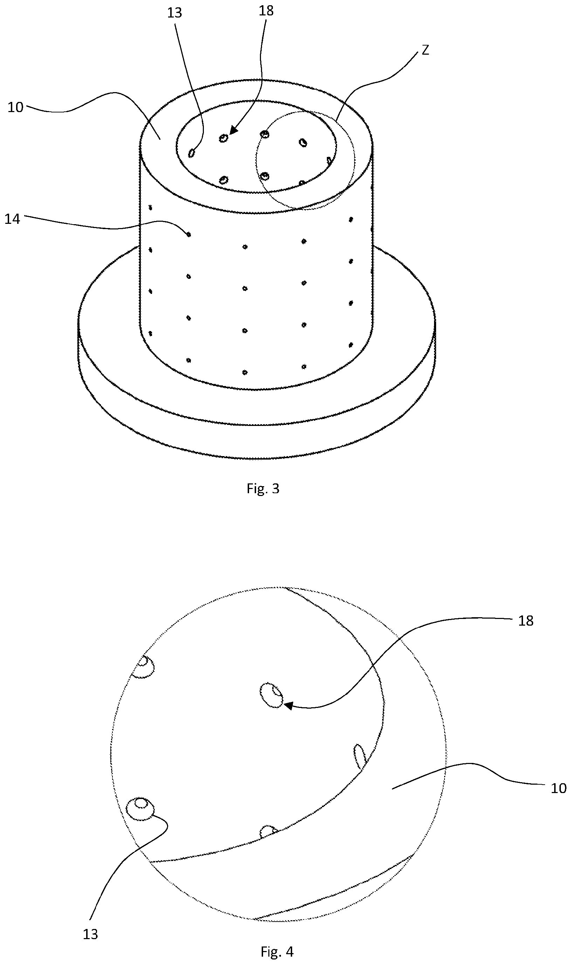

Referring in particular to Fig. 3, radial holes 12 are preferably uniformly distributed in inner sleeve 10 so as to ensure a uniform distribution of the fluid in the first gap 15 in the balance condition defined above.

Preferably, guiding device 1 includes sealing elements with low frictional coefficient (not shown in the Figures) associated with inner sleeve 10 and arranged to cooperate with shaft 2. Such sealing elements allow limiting fluid leakage from the first gap 15, thereby reducing consumptions related with the introduction of pressurised fluid through radial openings 17.

Preferably, through holes 12 of inner sleeve 10 have end portions 18, directed towards the first ends 13 thereof, having a cross-section larger than the remaining cross-section of holes 12. For instance, referring to Fig. 4, such end portions 18 may have a frusto-conical shape with cross-sectional size progressively increasing towards the first ends 13 of the respective holes 12. At said ends 18, fluid volumes are created that have uniform pressure in balance conditions. The fluid pressure in a given end portion 18 varies in inverse proportion to the thickness of the fluidic gap between inner sleeve 10 and shaft 2, that is to the thickness of the first gap 15, at said end portion 18. In this manner, when the longitudinal axis of shaft 2 does not coincide with axis A of guiding device 1 because of the relative movements between guiding device 1 and shaft 2, i.e. when the fluidic gap formed between inner sleeve 10 and shaft 2 (and hence the first gap 15) takes a non-uniform thickness and decreases on one side and increases on the radially opposite side, the pressure of the fluid volumes increases where the thickness of the fluidic gap is smaller and decreases where the thickness is greater. Thus, a pressure difference is created that pushes the shaft towards the side where the fluidic gap has a greater thickness, thereby tending to restore the balance condition in which the thickness of the fluidic gap is uniform or, otherwise stated, in which shaft 2 is in coaxial position relative to guiding device 1.

In accordance with the first embodiment of the guiding device, it is possible to introduce fluid through one or more radial openings located on the side of the guiding device where the thickness of the fluidic gap is smaller. In this manner, the pressure difference between the holes directed towards the side of the guiding device where the thickness of the fluidic gap is smaller and the holes directed towards the opposite side can be increased, thereby compensating more quickly the displacement of shaft 2, i.e. bringing it more quickly back to the balance condition.

In accordance with a second embodiment of the guiding device, the second gap 16 between inner sleeve 10 and outer sleeve 11 is lacking. The inner sleeve includes a network of channels establishing communication between radial holes 12 of inner sleeve 10, and the at least one radial opening 17 of outer sleeve 11 communicates, preferably directly, with a respective radial hole aligned with the same opening. In this embodiment, the fluid introduced into the at least one radial opening 17 reaches the first gap 15 through the network of communication channels and radial holes 12.

In accordance with a third embodiment of the present invention, outer sleeve 11 has at least two radial openings 17 and the second gap 16 formed between inner sleeve 10 and outer sleeve 11 is divided into at least two sectors or segments that are not in direct communication with each other. Each sector of the second gap 16 communicates, preferably directly, with a corresponding radial opening 17 and with second ends 14 of a corresponding subset of radial holes 12 of inner sleeve 10. In this way, fluid introduced into a radial opening 17 reaches the first gap 15 through the respective sector of the second gap 16 and the corresponding subset of radial holes 12

In accordance with the guiding device of the third embodiment, it is possible to introduce pressurised fluid through one or more radial openings 17, so as to cause a pressure increase in the only subsets of holes 12 communicating with such radial openings 17 through the respective sectors of the second gap 16. In case of displacement of shaft 2 relative to the balance condition, this possibility can be advantageously exploited for increasing the pressure in the radial holes directed towards the side of the guiding device where the fluidic gap has a smaller thickness, thereby assisting in a quicker restoration of the balance condition.

In accordance with a fourth embodiment of the present invention, the second gap 16 between inner sleeve 10 and outer sleeve 11 is lacking. Outer sleeve 11 has at least two radial openings 17 and inner sleeve 10 includes at least two networks of channels establishing communication between radial holes 12 of inner sleeve 10, the networks not being in direct communication with each other. Each radial opening 17 communicates, preferably directly, with a respective radial hole aligned with the same opening and each network of channels is arranged to make the radial holes of a corresponding subset of radial holes 12 of inner sleeve 10 communicate with one another. In this way, the fluid introduced into a radial opening 17 reaches the first gap 15 through the respective network of channels and the corresponding subset of radial holes 12.

In accordance with the guiding device of the fourth embodiment, it is possible to introduce pressurised fluid through one or more radial openings 17, so as to cause a pressure increase in the only subsets of holes 12 communicating with such radial openings 17 through the respective networks of channels. In case of displacement of shaft 2 relative to the balance condition, this possibility can be advantageously exploited for increasing the pressure in the radial holes directed towards the side of the guiding device where the fluidic gap has a smaller thickness, thereby assisting in a quicker restoration of the balance condition.

Preferably, the guiding device according to the invention further includes pressure sensors and/or displacement sensors and/or gyroscopic sensors (not shown in the Figures), capable of detecting the relative displacements between guiding device 1 and shaft 2, in particular a possible displacement of shaft 2 relative to the balance condition. A control system (not shown in the Figures) is configured to control introduction of the pressurised fluid through radial openings 17 of outer sleeve 11. Advantageously, the control system can receive the data detected by such sensors, in particular a possible displacement of shaft 2 relative to the balance condition, entailing a non-uniform thickness of the fluidic gap, and can control, based on such data, introduction of the pressurised fluid through one or more radial openings located on the side of the guiding device where the thickness of the fluidic gap is smaller, or anyway openings communicating with subsets of radial holes where the thickness of the fluidic gap is smaller. This allows, as explained before, compensating more quickly the misalignment of the member to be guided relative to the aforesaid balance condition.

Advantageously, the provision of fluid in the first gap 15 formed between inner sleeve 10 and shaft 2 further allows removing possible particles of dust and material generated by wear, besides making use of lubricants superfluous. Such features make guiding device 1 suitable for use in applications in which a clean environment is required.

The fluid introduced further contributes to cool both guiding device 1 and shaft 2. Should guiding device 1 be mounted on a roto-translating motor, the fluid would allow, for instance, cooling the electromagnetic parts inside the motor.

Lastly, guiding device 1 according to the invention has the advantage of having a compact structure, what makes the device suitable for use in applications requiring a reduced bulk.

The invention can find application in different technical fields, and is particularly suitable for guiding roto-translating shafts of capping heads for applying for instance screw or pressure caps to containers, more particularly bottles.

In accordance with a further embodiment of the invention, the inner sleeve and the outer sleeve are made as an integral piece by means of the 3D printing technology (Additive Manufacturing).

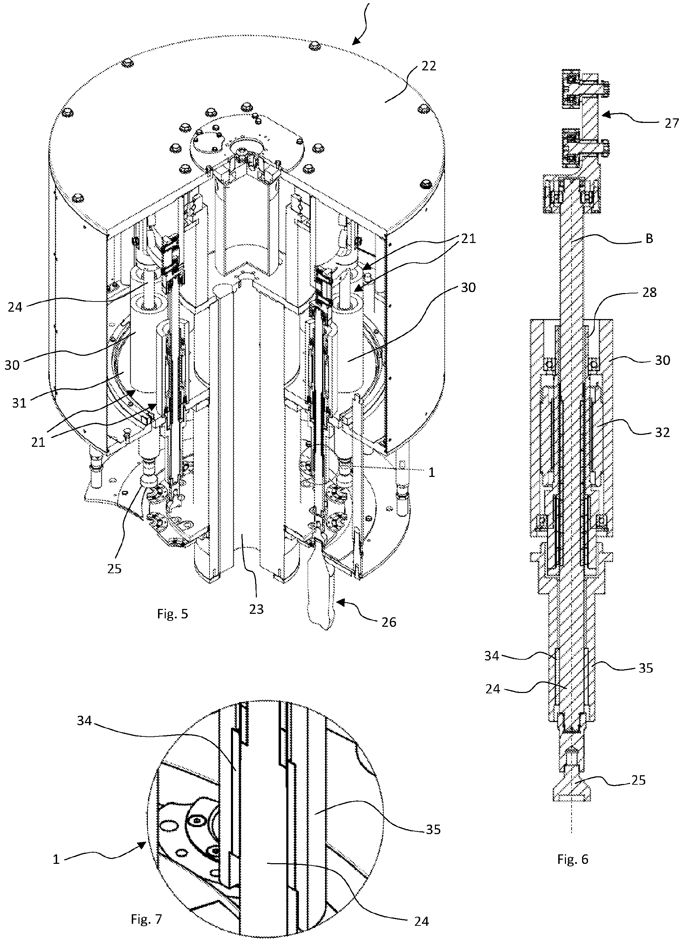

Figs. 5 to 7 show the application of guiding device 1 according to the invention in one of such capping machines. As known, a capping machine generally comprises at least one capping head, in turn including a cap application part, equipped with a cap gripping member which is generally made to move according to a rotary movement about a longitudinal axis and a translatory movement along said axis, and a driving part, for instance located axially above the cap application part. The axial sliding of the gripping member also serves for applying a top load necessary to keep the container to be capped blocked during the capping operation. In conventional heads, one or more springs allow adjusting such a load.

More particularly, Fig. 5 shows, by way of example, a capping turret 20 preferably including a plurality of capping heads 21, each incorporating guiding device 1. Turret 20 comprises a stationary frame 22, inside which there is mounted a rotating structure 23, to which heads 21 are fixedly connected for rotation. Rotation of structure 23 allows bringing capping heads 21 in correspondence of bottles 26. The means for causing rotation of structure 23 are conventional and are not shown.

Referring also to Fig. 6, each head 21 includes a shaft 24 which is to be driven into the roto-translatory motion necessary for the capping operations and which carries, at its bottom, gripping member 25 for the cap to be applied to a bottle 26. At its top, shaft 24 is provided with means 27 for connection to members belonging to the driving part (not shown) and causing the axial sliding of the head under the control, for instance, of cams.

Capping head 21 includes a cylindrical body 30 fixedly connected for rotation to rotating structure 23 of turret 20. More particularly, cylindrical bodies 30 of all heads are fastened to a flange 31 in structure 23. Cylindrical body 30 internally accommodates stator 32 and rotor 28 of an electric motor for generating the rotary motion to be imparted to shaft 24 through a coupling device of known type. Reference symbol B denotes the axis of rotation of shaft 24.

Capping head 21 includes, for instance in a bottom portion shown enlarged in Fig, 7, an air cushion guiding device similar to the device described above. Such a guiding device comprises an outer cylindrical sleeve 35, similar to outer sleeve 11 of guiding device 1 described above and provided therefore with an opening (not shown) for the introduction of a pressurised fluid, and an inner sleeve 34, similar to inner sleeve 10 and provided therefore with a plurality of through holes (not shown) for the passage of the pressurised fluid and the creation of the fluidic gap between inner sleeve 34 and roto-translating shaft 24.

As known, when a cap is to be applied to a bottle 26, it is necessary to impart a roto-translatory motion to rod 24 of head 21 concerned. The rotary and translatory movements allow bringing the cap, held by cap gripping member 25, in contact with bottle 26 and hence screwing or inserting the cap onto or into bottle 26. Guiding device 1 allows preventing axis B of shaft 24 from becoming misaligned during its roto-translatory motion, and in particular during the phases of contact between cap gripping member 25 and bottles 26 and of cap screwing or insertion.

It is clear that the above description is given only by way of non-limiting example and that changes and modifications are possible without departing from the scope of the invention as defined by the appended claims.

## Claims

1. A fluid cushion guiding device (1) for guiding a shaft (2) into relative movement, rotary and translatory, relative to the guiding device (1), the guiding device (1) comprising an inner sleeve (10) and an outer sleeve (11) that are coaxial with each other, wherein the inner sleeve (10) has a plurality of radial holes (12) having first ends (13) communicating with a first sealed gap (15) provided between the inner sleeve (10) and the shaft (2) to be guided, wherein the guiding device (1) includes sealing elements with low frictional coefficient associated with the inner sleeve (10) and arranged to cooperate with the shaft (2), limiting fluid leakage from the first gap (15) and wherein the outer sleeve (11) has at least one radial opening (17) **characterised in that** the said radial opening (17) is arranged to allow introducing from the outside a pressurised fluid which, by reaching the first gap (15) through said holes (12), is suitable to create a gap of pressurised fluid between the inner sleeve (10) and the shaft (2) to be guided.

2. The guiding device (1) according to claim 1, including a second gap (16) between the inner sleeve (10) and the outer sleeve (11), said second gap (16) communicating with the at least one radial opening (17) as well as with second ends (14) of the radial holes (12).

3. The guiding device (1) according to claim 1 or 2, wherein the inner sleeve (10) includes a network of channels establishing communication among the radial holes (12).

4. The guiding device (1) according to claim 2, wherein the outer sleeve (11) has at least two radial openings (17) and wherein the second gap (16) is divided into at least two sectors that are not in direct communication with each other, each sector of the second gap (16) communicating with a corresponding radial opening (17) and with the second ends (14) of a corresponding subset of radial holes (12) of the outer sleeve (11).

5. The guiding device (1) according to claim 1, wherein the outer sleeve (11) has at least two radial openings (17) and the inner sleeve (10) includes at least two networks of channels establishing communication among radial holes (12), the at least two networks of channels not being in direct communication with each other and each network of channels communicating with a corresponding radial opening (17) and being arranged to make the radial holes of a corresponding subset of radial holes (12) of the outer sleeve (11) communicate with one another.

6. The guiding device (1) according to claim 1, wherein the radial holes (12) of the inner sleeve (10) have end portions (18) facing the respective first ends (13), said end portions (18) having a cross-section larger than the remaining cross-section of the holes.

7. The guiding device (1) according to any of the preceding claims, further including sensors capable of detecting relative movements between the guiding device (1) and the shaft (2) to be guided, and a control system configured to control introduction of the pressurised fluid through one or more radial opening(s) (17) of the outer sleeve (11) on the basis of the movements detected by said sensors, so as to compensate the displacement of the shaft (2) to be guided relative to a balance condition in which the shaft (2) to be guided is coaxial with the guiding device (1).

8. The guiding device (1) according to any of the claims 1 to 6, wherein the inner sleeve (10) and the outer sleeve (11) are two separate sleeves.

9. A capping head (21) including a cap application part (24, 25) equipped with a cap gripping member (25) and a shaft (24) that are arranged to move according to a rotary movement about a longitudinal axis (B) and a translatory movement along said axis, and a driving part (27, 28, 32) for said cap application part (24, 25), **characterised in that** the capping head (21) includes a fluid cushion guiding device (1) according to any of claims 1 to 8 suitable to guide the movements of the shaft (24).

10. A turret (20) of a capping machine, including a plurality of capping heads (21) according to claim 9 mounted on a rotating structure (23) of the turret (20) and fixedly connected for rotation to said structure.

## Patentansprüche

1. Fluidkissen Führungsvorrichtung (1) zum Führen einer Welle (2) in Relativbewegung, rotatorisch und translatorisch, relativ zu der Führungsvorrichtung (1), wobei die Führungsvorrichtung (1) eine innere Hülse (10) und eine äußere Hülse (11) aufweist, die koaxial zueinander sind, wobei die innere Hülse (10) mehrere radiale Öffnungen (12) hat, deren erste Enden (13) mit einem ersten versiegelten Spalt (15), der zwischen der inneren Hülse (10) und der zu führenden Welle (2) vorgesehen ist, in Verbindung stehen, wobei die Führungsvorrichtung (1) Dichtelemente mit niedrigem Reibungskoeffizienten aufweist, die der inneren Hülse (10) zugeordnet und dafür vorgesehen sind, mit der Welle (2) zusammenzuwirken, um Fluidleckage aus dem ersten Spalt (15) zu begrenzen und wobei die äußere Hülse (11) wenigstens eine radiale Öffnung (17) aufweist, **dadurch gekennzeichnet, dass** die radiale Öffnung (17) dafür vorgesehen ist, von außen unter Druck stehendes Fluid einzuführen, das durch Erreichen des ersten Spalts (15) durch die Öffnungen (12) dazu in der Lage ist, einen Spalt von unter Druck stehendem Fluid zwischen der inneren Hülse (10) und der zu führenden Welle (2) zu erzeugen.

2. Führungsvorrichtung (1) nach Anspruch 1, mit einem zweiten Spalt (16) zwischen der inneren Hülse (10) und äußeren Hülse (11), wobei der Spalt (16) mit der wenigsten eine radiale Öffnung (17) sowie den zweiten Enden (14) der radialen Öffnungen (12) in Verbindung steht.

3. Führungsvorrichtung (1) nach Anspruch 1 oder 2, wobei die innere Hülse (10) ein Netzwerk von Kanälen enthält, die eine Verbindung zwischen den radialen Öffnungen (12) herstellen.

4. Führungsvorrichtung (1), nach Anspruch 2, wobei die äußere Hülse (11) wenigstens zwei radiale Öffnungen (17) hat und wobei der zweite Spalt (16) in wenigstens zwei Sektoren unterteilt ist, die nicht direkt miteinander in Verbindung stehen, wobei jeder Sektor des zweiten Spalts (16) mit einer entsprechenden radialen Öffnung (17) und mit den zweiten Enden (14) einer entsprechenden Untergruppe von radialen Öffnungen (12) der äußeren Hülse (11) in Verbindung steht.

5. Führungsvorrichtung (1) nach Anspruch 1, wobei die äußere Hülse (11) wenigstens zwei radiale Öffnungen (17) hat und die innere Hülse (10) wenigstens zwei Netzwerke von Kanälen enthält, die eine Verbindung zwischen radialen Öffnungen (12) herstellen, wobei die wenigstens zwei Netzwerken von Kanälen miteinander nicht in direkter Verbindung stehen und jedes Netzwerk von Kanälen mit einer entsprechenden radialen Öffnung (17) in Verbindung steht und dafür vorgesehen ist, die radialen Öffnungen einer entsprechenden Untergruppe der radialen Öffnungen (12) der äußeren Hülse (11) miteinander zu verbinden.

6. Führungsvorrichtung (1) nach Anspruch 1, wobei die radialen Öffnungen (12) der inneren Hülse (10) Endabschnitte (18) haben, die den entsprechenden ersten Enden (13) zu gewandt sind, wobei die Endabschnitte (18) einen Querschnitt haben, der größer als der verbleibende Querschnitt der Öffnung ist.

7. Führungsvorrichtung (1) nach einem der vorstehenden Ansprüche, zusätzlich mit Sensoren, die dazu in der Lage sind, Relativbewegungen zwischen der Führungsvorrichtung (1) und der zu führenden Welle (2) zu erfassen, und einem Steuersystem, das dafür ausgelegt ist, das Einbringen des unter Druck stehenden Fluids durch eine oder mehrere radiale Öffnungen (17) der äußeren Hülse (11) auf der Basis von Bewegungen, die von den Sensoren detektiert wurden, zu steuern, um die Verschiebung der zu führenden Welle (2) relativ zu einem Gleichgewichtszustand, in dem die zuführende Welle (2) koaxial mit der Führungsvorrichtung (1) ist, zu kompensieren.

8. Führungsvorrichtung (1) nach einem der Ansprüche 1 bis 6, wobei die innere Hülse (10) und die äußere Hülse (11) zwei separate Hülsen sind.

9. Verschließkopf (21) mit einem Verschluss-Applizierteil (24, 25), das mit einem verschlussgreifenden Glied (25) und einer Welle (24), die dafür ausgelegt ist, sich in einer Drehbewegung um eine Längsachse (B) und einer translatorische Bewegung entlang dieser Achse zu bewegen, und einem Antriebsteil (27, 28, 32) für das Verschluss-Applizierteil (24, 25), **dadurch gekennzeichnet, dass** der Verschließkopf (21) eine Fluidkissenführungsvorrichtung (1) nach einem der Ansprüche 1 bis 8 aufweist, die geeignet ist, die Bewegung der Welle (24) zuführen.

10. Ein Drehkreuz (20) einer Verschließmaschine, mit mehreren Verschließköpfen (21) nach Anspruch 9, die auf einer drehbaren Struktur (23) des Drehkreuzes (20) montiert sind und zur Drehung fest mit der Struktur verbunden sind.

## Revendications

1. Dispositif de guidage (1) à coussin de fluide pour guider un arbre (2) en mouvement relatif, en rotation et en translation, par rapport au dispositif de guidage (1), le dispositif de guidage (1) comprenant un manchon interne (10) et un manchon externe (11) qui sont coaxiaux l'un à l'autre, dans lequel le manchon interne (10) a une pluralité de trous radiaux (12) ayant des premières extrémités (13) en communication avec un premier espace étanche (15) prévu entre le manchon interne (10) et l'arbre (2) à guider, dans lequel le dispositif de guidage (1) comporte des éléments d'étanchéité à faible coefficient de frottement associés au manchon interne (10) et agencés pour coopérer avec l'arbre (2), limitant une fuite de fluide du premier espace (15) et dans lequel le manchon externe (11) a au moins une ouverture radiale (17), **caractérisé en ce que** ladite ouverture radiale (17) est agencée pour permettre l'introduction depuis l'extérieur d'un fluide sous pression qui, en atteignant le premier espace (15) à travers lesdits trous (12), est approprié pour créer un espace de fluide sous pression entre le manchon interne (10) et l'arbre (2) à guider.

2. Dispositif de guidage (1) selon la revendication 1, comportant un second espace (16) entre le manchon interne (10) et le manchon externe (11), ledit second espace (16) communiquant avec l'au moins une ouverture radiale (17) ainsi qu'avec des secondes extrémités (14) des trous radiaux (12).

3. Dispositif de guidage (1) selon la revendication 1 ou 2, dans lequel le manchon interne (10) comporte un réseau de canaux établissant une communication entre les trous radiaux (12).

4. Dispositif de guidage (1) selon la revendication 2, dans lequel le manchon externe (11) a au moins deux ouvertures radiales (17) et dans lequel le second espace (16) est divisé en au moins deux secteurs qui ne sont pas en communication direct l'un avec l'autre, chaque secteur du second espace (16) communiquant avec une ouverture radiale (17) correspondante et avec les secondes extrémités (14) d'un sous-ensemble correspondant de trous radiaux (12) du manchon externe (11).

5. Dispositif de guidage (1) selon la revendication 1, dans lequel le manchon externe (11) a au moins deux ouvertures radiales (17) et le manchon interne (10) comporte au moins deux réseaux de canaux établissant une communication entre des trous radiaux (12), les au moins deux réseaux de canaux n'étant pas en communication directe l'un avec l'autre et chaque réseau de canaux communiquant avec une ouverture radiale (17) correspondante et étant agencé pour faire communiquer les trous radiaux d'un sous-ensemble correspondant de trous radiaux (12) du manchon externe (11) les uns avec les autres.

6. Dispositif de guidage (1) selon la revendication 1, dans lequel les trous radiaux (12) du manchon interne (10) ont des portions d'extrémité (18) en face des premières extrémités (13) respectives, lesdites portions d'extrémité (18) ayant une section transversale plus grande que la section transversale restante des trous.

7. Dispositif de guidage (1) selon l'une quelconque des revendications précédentes, comportant en outre des capteurs capables de détecter des mouvements relatifs entre le dispositif de guidage (1) et l'arbre (2) à guider, et un système de commande configuré pour commander l'introduction du fluide sous pression à travers une ou plusieurs ouvertures radiales (17) du manchon externe (11) sur la base des mouvements détectés par lesdits capteurs, de façon à compenser le déplacement de l'arbre (2) à guider par rapport à une condition d'équilibre dans laquelle l'arbre (2) à guider est coaxial au dispositif de guidage (1).

8. Dispositif de guidage (1) selon l'une quelconque des revendications 1 à 6, dans lequel le manchon interne (10) et le manchon externe (11) sont deux manchons séparés.

9. Tête d'encapsulage (21) comportant une partie d'application de capsule (24, 25) équipée d'un organe de préhension de capsule (25) et d'un arbre (24) qui sont agencés pour bouger selon un mouvement en rotation autour d'un axe longitudinal (B) et un mouvement en translation selon ledit axe, et une partie d'entraînement (27, 28, 32) pour ladite partie d'application de capsule (24, 25), **caractérisée en ce que** la tête d'encapsulage (21) comporte un dispositif de guidage (1) à coussin de fluide selon l'une quelconque des revendications 1 à 8 approprié pour guider les mouvements de l'arbre (24).

10. Tourelle (20) d'une machine d'encapsulage, comportant une pluralité de têtes d'encapsulage (21) selon la revendication 9 montées sur une structure rotative (23) de la tourelle (20) et raccordées fixement pour une rotation sur ladite structure.
